# EUROPEAN PATENT APPLICATION

(11) **EP 4 596 297 A2**
(43) Date of publication of application: **06.08.2025**
(21) Application number: 25183441.2
(22) Date of filing: 05.11.2021
(51) Int. Cl.: B60L 5/04

(54) **SYSTEM FOR ELECTRICALLY FEEDING AT LEAST ONE ELECTRICALLY POWERED VEHICLE**

(30) Priority: 05.11.2020 WO PCT/EP2020/081199
(62) Divisional of application: 21807056.3
(71) Applicant: BluVein Innovation Pty. Ltd., Northgate, QLD 4013 (AU)
(72) Inventor: Oliver, James, Ascot, 4007 (AU); Robinson, Caleb, Warner, 4500 (AU)
(74) Representative: Groth & Co. KB

(57) **Abstract**

System for electrically feeding at least one electrically powered vehicle comprising suspended elongated slotted element(s) having electric conductor(s) arranged in slot(s) and current collector(s) co-acting with the slotted element. The current collector(s) comprises contact element(s), collector arm(s) supporting the contact element(s) at its first end and is adapted to connect to a vehicle with its second end, and actuator(s) configured to act on the collector arm(s) to displace the first end contact element towards the slotted element(s). The actuator(s) displaces the first end of the collector arm towards the slotted element(s). The contact element is connected to the collector arm via a tracking device comprising a body part to which said contact element(s) is connected. The tracking device further comprises lateral guiding means configured to co-act with at least one laterally facing portion of the elongated slotted element to guide the tracking device laterally relative elongated slotted element. At least one lateral guiding means is laterally displaceable relative said body part by means of an alignment actuator.

## Description

### TECHNICAL FIELD

The invention relates to the field of electrical feeding of vehicles, and in particular electrical feeding of underground vehicles.

### BACKGROUND

Concerns about the environmental impact of combustion of fossil fuels have led to an increased interest in electric vehicles, which have several potential benefits compared to vehicles with conventional internal combustion engines, including: a significant reduction of air pollution, as they do not emit harmful tailpipe emissions, reduced greenhouse gas emissions (depending on the fuel and technology used for electricity generation and/or charging the batteries) and reduced dependency on fossil fuels with increasingly variable supply and fluctuating prices. In underground applications such as mines, air pollution is particularly problematic.

One disadvantage to be overcome is the limited range of existing electric vehicles due to limitations in battery capacity. This is a particularly significant disadvantage for heavy vehicles such as long haulage trucks as well as construction and mining vehicles.

WO 2016/174030 discloses a system for electrical feeding of a vehicle in an underground environment such as a mine. The electrical feeding is used to propel the vehicle directly and/or to charge an onboard battery. The system comprises at least one elongated slotted element having at least one slot or groove in which electric conductors are arranged. The slotted element is suspended for example from the ceiling in the mine tunnels, and a current collector connects the vehicle electrically to the slotted element.

Such a system is advantageous since it not only provides low emissions, reduced need for battery capacity, but also good safety properties due to the slotted electric conductors. One problem however with such slotted electric conductors is that the current collector must be precisely aligned with the slots to provide adequate electric contact.

### SUMMARY

An object of the invention is to solve or improve on at least some of the problems mentioned above in the background section.

These and other objects are achieved by the present invention by means of a system and method according to the independent claims.

According to a first aspect of the invention, a system for electrically feeding at least one electrically powered vehicle is provided. The system comprises at least one elongated slotted element and at least one current collector. The at least one elongated slotted element is suspended and extends along a road section on which the at least one vehicle is adapted to travel with its lengthwise direction substantially in parallel with the direction of travel, said elongated slotted element comprising at least one electric conductor arranged in at least one slot in said elongated slotted element and being adapted to be electrically energized. The at least one current collector is adapted to co-act with said at least one suspended elongated slotted element. At least one of the current collector(s) comprises at least one contact element and at least one collector arm, and may furthermore comprise, or be provided with or be arranged to co-act with, at least one actuator. The at least one contact element is adapted to connect electrically with a corresponding at least one electric conductor of said elongated slotted element. The collector arm supports the at least one contact element at its first end and is adapted to connect directly or indirectly to an electrically propellable vehicle at its second end. The at least one actuator is configured to act on the collector arm to displace the first end thereof towards the at least one suspended elongated slotted element. The contact element is connected to the collector arm by means of a tracking device, said tracking device comprising a body part to which said at least one contact element is connected. The tracking device further comprises lateral guiding means configured to co-act with at least one laterally facing portion of the elongated slotted element to guide the tracking device laterally relative elongated slotted element. At least one lateral guiding means is laterally displaceable relative said body part by means of an alignment actuator.

As described above, a system for electrically feeding one or more electrically powered vehicles is provided, which vehicles may be a ground vehicles, road vehicles, mining vehicles or conveyances. The system comprises one or more slotted elements being elongated, which in this context means having a greater length than width and height. The system preferably comprises a plurality of such elements arranged consecutively along the extension of the road. It is understood that the elongated slotted element being suspended refers to that it is arranged above the road surface, for instance by being suspended from for example a ceiling or wall of a mining tunnel or from one or more stands, posts or the like. The elongated slotted element comprises at least one slot or groove extending along the lengthwise direction of the elongated slotted element with at least one electric conductor arranged in at least one of the slots or grooves. The elongated slotted element does not necessarily need to be suspended vertically, i.e. with its slots facing vertically downwards. On the contrary, the elongated slotted element may even be suspended horizontally, i.e. with its slots facing sideways, or at any angle between a horizontal and vertical position. It is understood that any reference herein to the lengthwise/longitudinal direction and lateral direction is defined with respect to the slotted element.

At least one of the current collector(s) comprises at least one contact element, at least one collector arm and at least one actuator. The at least one contact element may be formed from one, two, or a plurality of elements being at least partly formed of a conductive material, for instance having at least one contact surface being adapted to connect electrically and mechanically with a corresponding electric conductor. The at least one collector arm of the at least one of the current collector(s) may be formed from one or more arm segments/portions arranged in parallel or in series. The at least one actuator may comprise one or more actuators being part of the at least one of the current collector(s) or being separate part(s) co-acting with one, two or more current collectors. The at least one actuator is configured to act on the collector arm in the sense that it provides a force onto the collector arm, or onto one or more of the arm segments/portions (if any), to displace the contact element towards the at least one suspended elongated slotted element, or more specifically towards the corresponding electric conductor(s). The at least one contact element is connected to the collector arm by means of a tracking device, i.e. the tracking device is connected to the first end of the collector arm. The at least one contact element is connected to the body part rigidly or resiliently, for instance by being connected via one or more spring elements. The lateral guiding means of the tracking device is/are configured to co-act with at least one laterally facing portion of the elongated slotted element. Preferably, but not necessarily, the lateral guiding means co-act with laterally facing portions on both/opposite lateral sides of the slotted element, which sides may be facing in opposite lateral directions. The lateral guiding means may for example be formed as one or more guiding wheels configured to roll against said laterally facing portions, or as sliding elements configured to slide against the laterally facing portions. At least one of the lateral guiding means is laterally displaceable relative said body part by means of an alignment actuator, which may for example be a hydraulic actuator, a pneumatic actuator, an electric motor or a solenoid. The alignment actuator may alternatively be a mechanical actuator comprising for example a linkage and/or a hydraulic circuit.

The invention is based on the insight that the contact elements of the current collector may be precisely aligned with the corresponding conductors by having a tracking device with lateral guiding means which not only guide the contact elements, but are also laterally displaceable to be able to align the contact elements with the conductors. Such alignment is achieved by means of actuating the guiding means to provide relative lateral displacement between the contact elements and the slotted element.

In embodiments, the tracking device further comprises vertical guiding means configured to co-act with the elongated slotted element to guide the tracking device vertically relative said elongated slotted element. At least one of the vertical guiding means may be vertically displaceable relative the body part to vertically align the contact element(s) with the conductor(s) by means of the alignment actuator or an additional alignment actuator. It is understood that the vertical direction is defined with respect to the slotted element as the plane in which the slot(s) are aligned. The vertical plane is thus not necessarily perpendicular with the road surface.

In embodiments, the lateral guiding means comprises at least two guiding elements or wheels adapted to co-act with opposite lateral sides of the slotted element, the at least two guiding elements or wheels being laterally displaceable relative the body part by means of the alignment actuator between extended positions where the guiding wheels are spaced apart a first distance being greater than the lateral width of the elongated slotted element and withdrawn positions where the guiding wheels are spaced apart a second distance corresponding to said lateral width.

In embodiments, the alignment actuator of the tracking device is a mechanical actuator comprising an alignment bar having a length in the lateral direction being equal to or greater than said first distance, said alignment bar being displaceable vertically relative the body part, and being mechanically connected to the guiding elements or wheels such as to displace the at least two guiding elements or wheels towards each other when the alignment bar is pushed towards the body part. The mechanical connection may for example be achieved by means of a desmodromic type of cam arrangement which is arranged to push and pull the guiding elements or wheels laterally, a set of interconnected hydraulic cylinders, a rack and pinion arrangement, or any other suitable mechanical connection known to the person skilled in the art.

In such embodiments comprising an alignment bar, the system further comprises an electronic control system and at least one thereto connected position sensor, said electronic control system being configured to, in response to signals from said at least one position sensor, control the at least one actuator such that the alignment bar of the tracking device is laterally aligned with said elongated slotted element, whereafter the electronic control system controls the at least one actuator to displace the tracking device towards the elongated slotted element such that the alignment bar is pushed towards the body part of the tracking device, whereby the guiding wheels are actuated laterally towards the slotted element until the contact element(s) is/are laterally aligned and in contact with the corresponding electric conductor(s).

In an alternative embodiment (without the above described alignment bar), the alignment actuator of the tracking device may be an electrical, hydraulic or pneumatic actuator. In such embodiments, the system may further comprise an electronic control system and at least one thereto connected position sensor, said electronic control system being configured to control the alignment actuator such that the guiding elements or wheels are displaced to their extended positions, whereafter the electronic control system, in response to signals from said at least one position sensor, controls the at least one actuator such that tracking device is aligned with the slotted element between the guiding elements or wheels, whereafter the alignment actuator is controlled to displace the guiding elements or wheels laterally inwards towards the slotted element until the contact element(s) is/are laterally aligned with the corresponding electric conductor(s), whereafter the at least one actuator is controlled to displace the tracking device towards the slotted element until the contact element(s) is/are in contact with the corresponding electric conductor(s).

In embodiments, the elongated slotted element is provided with a flange or groove on at least one lateral side thereof or on both lateral sides, said flange(s) or groove(s) extending along the lengthwise direction of the elongated slotted element and being configured to receive the lateral guiding means or guiding wheels thereon/therein to support the tracking device vertically when the guiding elements or wheels are in abutment with the elongated slotted element.

In alternative embodiments, the laterally facing portions of the slotted element are provided with aligning edges at the bottom thereof, i.e. each laterally facing portion is provided with an aligning edge at its bottom. Edge in this context refers to the longitudinal edge which separates the laterally facing portion from the portion of the slotted element facing the vehicle, i.e. the portion/surface in which the slots are formed. It is understood that the terms top and bottom do not necessarily require the slotted element to be suspended vertically; the bottom edges are to be interpreted as the edges being closest to the slots, and the top edges are furthest away from the slots. Furthermore, the tracking device is provided with at least one set of aligning wheels or sliding elements on each lateral side thereof. Two or more sets of aligning wheels or sliding elements may be provided on each lateral side of the tracking device, the sets of aligning wheels or sliding elements being spaced apart in the lengthwise direction. The aligning wheels or sliding elements at each lateral side are disposed to form a respective aligning surface being arranged to slide laterally (and upwards/downwards assuming a vertical alignment) against the corresponding aligning edges. Put differently, each aligning wheel or sliding element is aligned to slidingly co-act with the corresponding aligning edge at the bottom of the laterally facing portion of the corresponding lateral side of the slotted element.

Furthermore, the aligning wheels or sliding elements are spaced apart a distance such that at least one aligning wheel or sliding elements of each set of aligning wheels is able to roll or slide against a corresponding aligning edge at the bottom of the laterally facing portions. In other words, at least one of the aligning wheels or sliding elements at a first/second lateral side of the slotted element is configured to roll or slide against the aligning edge at the bottom of the slotted element at the first/second lateral side thereof when the current collector is laterally aligned with the slotted element. The two sets of aligning wheels or sliding elements may be described as being laterally spaced apart a distance corresponding to the distance between aligning edges at the bottom of the slotted element. The guiding wheels or sliding elements are laterally displaceable between extended positions where the guiding wheels or sliding elements are spaced apart a first distance being greater than or equal to the lateral width of the elongated slotted element and withdrawn positions where the guiding wheels or sliding elements are disposed at a distance from each other such that the guiding wheels roll or slide against respective lateral portions. This alternative embodiment is advantageous since the corresponding alignment of the aligning edges and the aligning surface formed by the aligning wheels or sliding elements allows the current collector to automatically align with the slotted element by means of, after an initial lateral alignment which does not need to be very accurate, pushing the current collector upwards towards the slotted element such that the aligning wheel(s) or sliding element(s) slide(s) laterally on the aligning edge(s) until the current collector is centered/aligned with the slotted element. Further, the guiding wheels or sliding elements being configured to roll or slide on the laterally facing portions provides guiding of the tracking device relative said elongated slotted element.

In embodiments, the aligning edges are chamfered, and the aligning wheels are rotatable around axes of rotation disposed at corresponding angles as the aligning edges. Thus, the aligning edges and the corresponding aligning surfaces are disposed at corresponding angles. In other embodiments, the aligning edges may be rounded/convex.

In embodiments, at least one, or each, laterally facing portion of the slotted element is furthermore provided with a guiding edge at the top thereof, wherein the guiding wheels or sliding elements are laterally displaceable relative the body part by means of being supported by holding elements at the lateral sides of the tracking device, which holding elements are rotatable relative the body part around respective axes of rotation being substantially parallel with the lengthwise direction. Thus, the at least one alignment actuator is configured to rotate the holding elements to laterally displace the guiding wheels or sliding elements. At least one, or each, set of guiding wheels or sliding elements is, in the withdrawn position, disposed to co-act with the corresponding guiding edge(s) at the top of the laterally facing portion, and the guiding wheels in the withdrawn position are disposed at a distance from each other such that said at least one set of guiding wheels roll on said guiding edge. Put differently, when in the withdrawn positions, the guiding wheels are spaced apart a second distance which corresponds to (but is not exactly equal to) the lateral width of the slotted element. These embodiments are advantageous since the guiding wheels rolling on the guiding edges provides vertical guiding of the current collector.

In embodiments, the guiding edges are chamfered, and the guiding wheels are rotatable around axes of rotation disposed at corresponding angles as the guiding edges. In other embodiments, the guiding edges may be rounded/convex.

In embodiments, the guiding wheels or sliding elements at each lateral side form a respective guiding surface, wherein the aligning wheels or sliding elements and the guiding wheels or sliding elements are aligned such that, in the extended positions of the guiding wheels or sliding elements, at each lateral side, the aligning surface of the aligning wheels or sliding elements and the guiding surface of the adjacent guiding wheels or sliding elements are disposed in a common plane. For example, the aligning wheels and the guiding wheels may have the same diameter, and in the extended positions of the guiding wheels, the axis of rotation of at least one, or each, set of guiding wheels and the axis of rotation of the adjacent set of aligning wheels are located in a common plane, which plane is disposed at the same angle as the corresponding chamfered edge. These embodiments are advantageous since the aligning wheels and guiding wheels are aligned when in the extended position, which means that the guiding wheels also act as aligning wheels which means that initial lateral alignment of the current collector can be less precise.

In embodiments, the contact element(s) is/are connected to the body part by means of a displacement device configured to displace the contact elements relative the body part in a direction towards and away from the body part, e.g. towards the slotted element. Assuming that the slotted element is arranged with the slots facing downwards, the displacement device is configured to displace the contact elements vertically. The displacement device comprises an actuator, which may for example be a hydraulic actuator, a pneumatic actuator, an electric motor, a solenoid or other means of actuation that can be applied by those skilled in the art. For simplicity of description, this embodiment has been described as a vertical overhead application. It is appreciated that the orientation may be vertical, horizontal or in fact any angle to the vertical plane. In alternate versions of this embodiment the aligning wheels as described may also be sliders, skid plates, magnetic strips or other translation devices that may be applied by those skilled in the art.

In embodiments, the at least one contact element is connected to the tracking device by means of one or more resilient connection means. The resilient connection means may comprise a spring device, for instance in the form of an arm segment being at least partly formed from a resilient material.

In embodiments, the collector arm comprises a telescopic arm segment being directly or indirectly connectable to a vehicle. In such embodiments, the at least one actuator comprises an actuator configured to extend and withdraw the telescopic arm segment, which actuator may be a hydraulic actuator, an electric actuator or a pneumatic actuator.

In embodiments, the current collector comprises rotational connection means for directly or indirectly pivotably connecting the second end of the collector arm to a vehicle. The rotational connection means may comprise at least one rotational/hinge joint, i.e. providing rotation/movement relative the vehicle in one or more planes, for instance in a vertical plane. Alternatively, rotational connection means may comprise a ball joint, i.e. providing rotation and translatory movement in all directions. In such embodiments, the at least one actuator comprises one or more actuator(s) configured to rotate the current collector around one or more rotational axis/axes defined by the rotational connection means.

In embodiments, the system further comprises a sliding device arranged at the second end of the collector arm, said sliding device being configured to allow lateral movement of the collector arm relative the vehicle.

In embodiments, at least one of the collector arm(s) is formed by at least two serially arranged arm segments comprising first and second arm segments, further comprising a sliding device arranged between said first and second arm segments, said sliding device being configured to allow lateral movement of the first arm segment relative the second arm segment.

In embodiments, the system comprises at least one electrically powered vehicle to which the second end of at least one current collector is connected.

According to a second aspect of the invention, a method for aligning a current collector with a suspended elongated slotted element in a system according to the first aspect of the invention. The method comprises:
- controlling the alignment actuator such that the guiding elements or wheels are displaced to their extended positions,
- controlling, in response to signals from said at least one position sensor, the at least one actuator such that tracking device is aligned with the slotted element between the guiding elements or wheels,
- controlling the alignment actuator to displace the guiding wheels laterally inwards towards the slotted element until the at least one contact element is laterally aligned with the at least one corresponding electric conductor,
- controlling the at least one actuator to displace the tracking device towards the slotted element until the at least one contact element is in contact with the corresponding at least one electric conductor.

According to a third aspect of the invention, a system for electrically feeding at least one electrically powered vehicle is provided. The system according to the third aspect corresponds to the system according to the first aspect, but with the difference being that the elongated slotted element is replaced with an elongated element having at least one electric conductor mounted thereto (but not necessarily in at least one slot), or one or more elongated elements being conductive themselves and being adapted to be electrically energized.

The features of the embodiments described above are combinable in any practically realizable way to form embodiments having combinations of these features. Further, all features and advantages of embodiments described above with reference to the first aspect of the invention may be applied in corresponding embodiments of the second and third aspects of the invention.

### BRIEF DESCRIPTION OF THE DRAWINGS

Above discussed and other aspects of the present invention will now be described in more detail using the appended drawings, which show presently preferred embodiments of the invention, wherein:
fig. 1 shows a cross section view of an embodiment of the system according to the invention arranged in a mine,
fig. 2a-2d shows an embodiment of the system according to the invention, where the current collector and slotted element are shown at different relative positions,
fig. 3 shows a perspective view of parts of another embodiment of the system according to the invention (shown without the at least one slotted element),
fig. 4 shows a side view of the embodiment in fig. 3 with its telescopic collector arm extended to two different lengths,
fig. 5 shows a side view of parts of yet another embodiment of the system according to the invention (shown without the at least one slotted element),
fig. 6 shows a perspective view of a tracking device of another embodiment of the system with the guiding wheels shown in extended and withdrawn positions,
fig. 7 shows a side view of the tracking device in fig. 6,
fig. 8 shows a cross-section view of parts of yet another embodiment of the system according to the invention (shown without collector arm and parts of the tracking device),
fig. 9a-d shows parts of yet another embodiment of the system according to the invention (shown without collector arm), where the tracking device is shown in four different positions relative the slotted element, and
fig. 10 shows a cross-section view of parts of the embodiment in fig. 9a-d .

### DETAILED DESCRIPTION

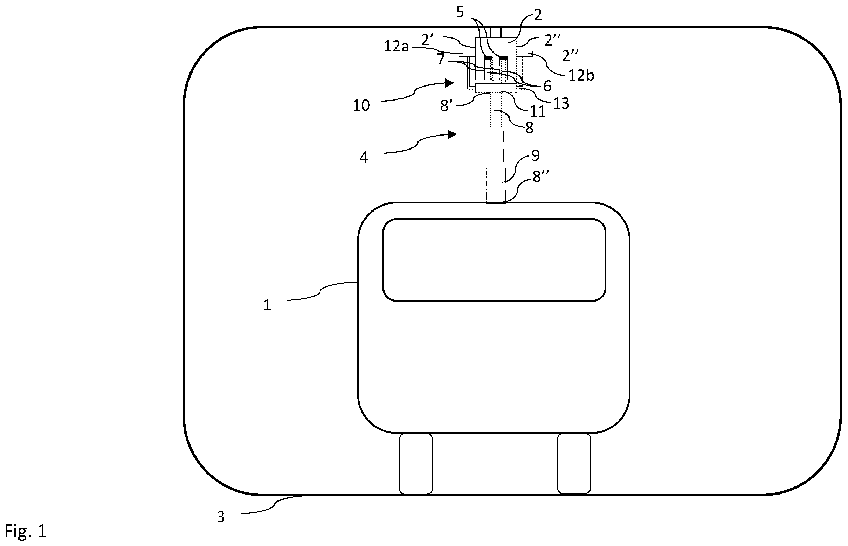

Fig. 1 shows a cross section view of an embodiment of the system according to the invention along with an electrically powered mine vehicle 1 arranged in a mine. The system comprises elongated slotted elements 2 and a current collector 4. The elongated slotted elements 2 are suspended consecutively from the ceiling of a mine tunnel extending along the road section 3 on which the vehicle 1 is adapted to travel with its lengthwise direction substantially in parallel with the direction of travel. The elongated slotted element comprises two electric conductors 5 arranged in respective slots 6 in said elongated slotted element. The electric conductors are electrically energized to supply the vehicle with electric power. The current collector 4 co-act with the elongated slotted elements 2. The current collector comprises two contact elements 7 and a telescopic collector arm 8. A hydraulic actuator 9 is arranged within the collector arm to extend and withdraw the arm. The contact elements 7 connect mechanically and electrically with the electric conductors 5. The collector arm 8 supports the contact elements at its first end 8' and connects to the vehicle 1 at its second end 8". The contact elements 7 are connected to the collector arm 8 by means of a tracking device 10, the tracking device comprising a body part 11 to which said contact elements 7 are attached. The tracking device 11 further comprises lateral guiding means 12a, 12b in the form of guiding wheels adapted to roll against opposite laterally facing portions 2', 2" of the elongated slotted element 2 to guide the tracking device laterally relative elongated slotted element. The guiding wheels are laterally displaceable relative said body part by means of an alignment actuator 13 between extended positions where the guiding wheels are spaced apart a first distance being greater than the lateral width of the elongated slotted element and withdrawn positions (as shown in fig. 1) where the guiding wheels are spaced apart a second distance corresponding to said lateral width. In fig. 1, only a laterally extending rod part of the hydraulic alignment actuator can be seen in fig. 1. The slotted element 2 is vertically aligned with respect to the road 3. The alignment actuator is electrical (comprises a motor), but may in other embodiments for example be hydraulic.

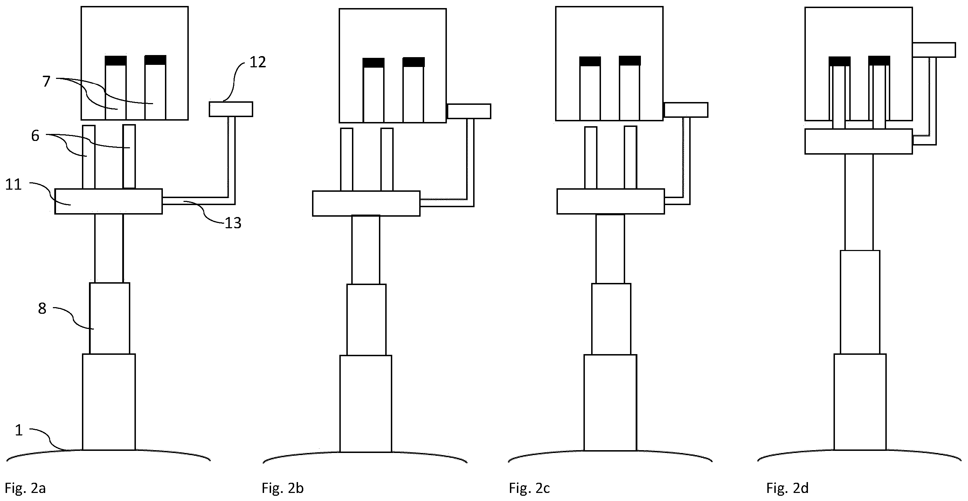

Fig. 2a-2d shows an embodiment of the system according to the invention, where the current collector and slotted element are shown at different relative positions. The embodiment corresponds to what is shown in fig. 1 and the figure references correspond, but it is simplified by comprising only one guiding wheel 12 rather than two wheels 12a, 12b as in fig. 1. In fig. 2a, the tracking device is "roughly" aligned with the slotted element. Such rough alignment can be achieved by means of positions sensors, which may be magnetic. Precise alignment is achieved by displacing the guiding wheel 12 laterally towards the body part 11 of the tracking device by means of actuator 13. In fig. 2b, the guiding wheel 12 is in abutment with a laterally facing side portion. In fig. 2c, the actuator 13 has further withdrawn, which means that the body portion 11 and collector arm 8 has been displaced to the right until the guiding wheel has reached its withdrawn position where the contact elements 7 are aligned with the slots 6 and the electric conductors. In fig. 2d, the telescopic collector arm 8 has been extended such that contact elements make contact with the conductors. It is understood that the alignment steps illustrated by fig. 2a-2d are typically controlled by an electronic control unit (ECU).

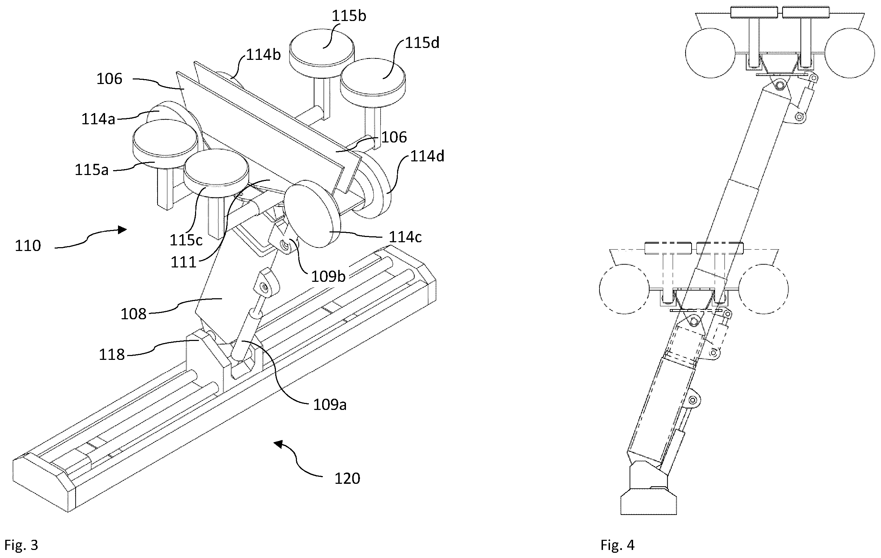

Fig. 3 shows a perspective view of parts of another embodiment of the system according to the invention (shown without the at least one slotted element). The tracking device 110 comprises four guiding wheels 115a-d, two on either side of the slotted element, which guiding wheels are laterally displaceable relative the body part 111 of the tracking device.

Two contact elements 106 each co-acting with a corresponding electric conductor. The tracking device is furthermore provided with vertical guiding wheels 114a-d arranged to roll against a downwardly facing portion of the slotted element (assuming a vertical alignment thereof). The alignment actuator (not shown) of the tracking device is electrical (comprises a motor), but may in other embodiments for example be hydraulic. The alignment actuator displace the two pairs of guiding wheels towards and away from each other. The collector arm 108 is telescopic and is rotationally connected at its first/upper end to the tracking device. The lower/second end of the current collector is connected via rotational connection means in the form of a hinge joint 118 to a sliding device 120. A hydraulic actuator 109a is configured to rotate the current collector around the rotational axis defined by the rotational connection means. A further hydraulic actuator 109b is configured to rotate the tracking device relative the collector arm. The sliding device 120 arranged at the second end of the collector arm is configured to allow lateral movement of the collector arm relative the vehicle.

Fig. 4 shows a side view of the embodiment in fig. 3 with its telescopic collector arm extended to two different lengths,

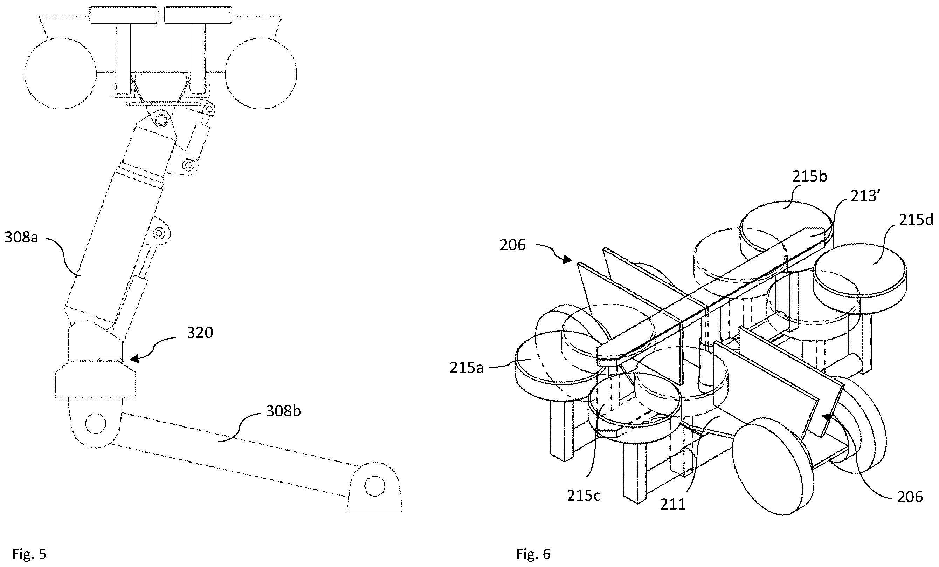

Fig. 5 shows a side view of parts of yet another embodiment of the system according to the invention (shown without the at least one slotted element). The embodiment corresponds to that shown in figs. 3-4, but differs in that the collector arm is formed from two serially arranged arm segments 308a, 308b. Arm segment 308a corresponds to the telescopic arm 108 in fig. 3, and is connected via a sliding device 320 (to allow relative lateral movement between the two arm segments) and a hinge joint to the lower arm segment 308b which is in turn is connectable to the vehicle via a lower hinge joint.

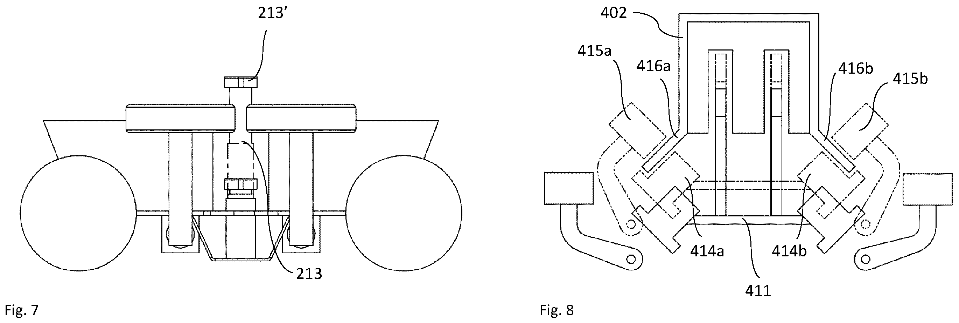

Fig. 6 shows a tracking device of another embodiment of the system which corresponds to the embodiment in fig. 3 except for the tracking device being different. The guiding wheels 215a-d are shown in extended and withdrawn positions, and fig. 7 shows a side view of the tracking device in fig. 6 illustrating the vertical movement of the alignment bar 213'. A total of four contact elements 206, where two co-act with each electric conductor, are connected to the body part 211. The alignment actuator of the tracking device is a mechanical actuator 213 comprising an alignment bar 213' having a length in the lateral direction being equal to or greater than the distance between the guiding wheels in their extended positions (first distance). The alignment bar is displaceable vertically relative the body part 211 and is mechanically connected to the guiding wheels to displace the two pairs of guiding wheels towards each other when the alignment bar is pushed towards the body part. The mechanical connection may for example be achieved by means of a desmodromic type of cam arrangement, i.e. the downwards movement of the alignment bar incurs a rotation of a cam which in turn pulls the guiding wheels inwards.

Fig. 8 shows a cross-section view of parts of yet another embodiment of the system according to the invention (shown without collector arm and parts of the tracking device).

This embodiment is similar to those shown in figs. 3-5 but differs mainly in that the slotted element 402 is provided with flanges 416a, 416b at both lateral sides. The flanges extend along the lengthwise direction of the elongated slotted element. The guiding wheels 415a, 415b are angled such that they roll onto the flanges 416a-b to support the tracking device vertically, which means that it is not necessary to force the tracking device upwards once the guiding wheels have engaged with the flanges. The vertical guiding wheels 414a-b are also angled to roll against opposite lower sides of the flanges. The guiding wheels 415a-b are rotatably connected to L-shaped holding elements which are in turn rotatably connected to the body part (not shown) such that the guiding wheels are laterally displaceable between extended positions (angled out) as shown with solid lines, and withdrawn positions (angled in) as shown with dotted lines when making contact with the flanges. This means that the tracking device can be aligned with the slotted element by means of upwards movement together with inwards displacement of the guiding wheels.

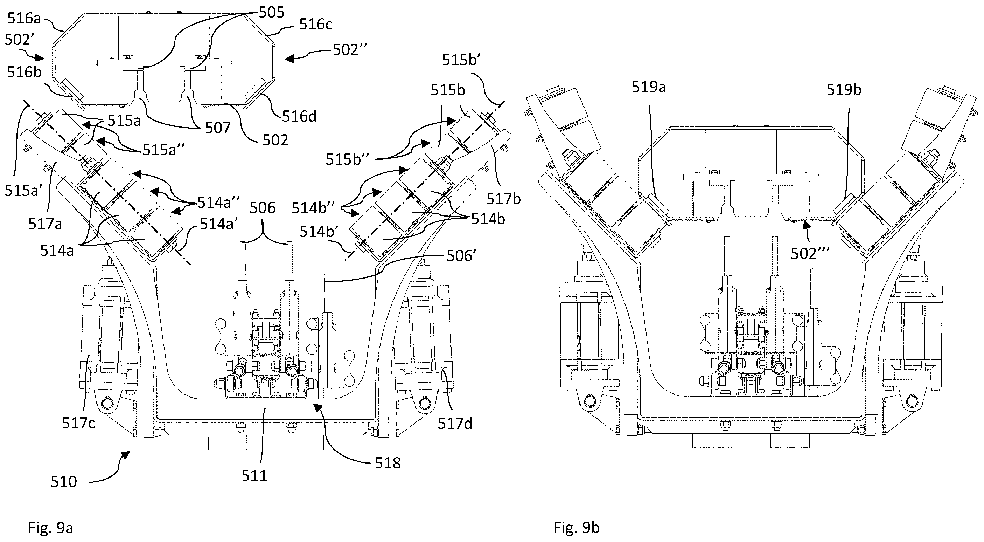

Fig. 9a-d shows parts of yet another embodiment of the system according to the invention (shown without the collector arm, which may be of the type shown in fig. 3/4 or fig. 5), where the tracking device 510 is shown in four different positions relative the slotted element 502. The slotted element is seen in a cross-section, and the longitudinal end of the current collector is seen. The elongated slotted element 502 differs from the above-described embodiments in that it comprises chamfered guiding edges 516a, 516c at the top of the laterally facing portions 502', 502" of the slotted element, and chamfered aligning edges 516b, 516d at the bottom. In this embodiment, the edges are chamfered at 45 degrees angle relative the direction of movement of the contact elements, which in the shown vertical alignment equals to 45 degrees relative a vertical plane. The elongated slotted element comprises two electric conductors 505 arranged in respective slots 507 in the elongated slotted element. In other embodiments, there may be only one electric conductor, alternatively three or more electric conductors.

The tracking device 510 comprises two sets of aligning wheels 514a, 514b on each lateral side thereof (only one set on each side can be seen in fig. 9a-d), the aligning wheels being stationary (apart from rolling motion) relative the body part 511. The aligning wheels are angled at 45 degrees such as to be able to roll against the chamfered aligning edges 516b, 516d. The aligning wheels thus form vertical guiding means. Further, due to the "V-shape" formed by the aligning wheels, they also form lateral guiding means by means of upwards movement of the tracking device and sliding action of the aligning wheels against the chamfered aligning edges. In this embodiment, each set of aligning wheels comprise three parallel wheels arranged to rotate around respective common axes of rotation 514a', 514b'.

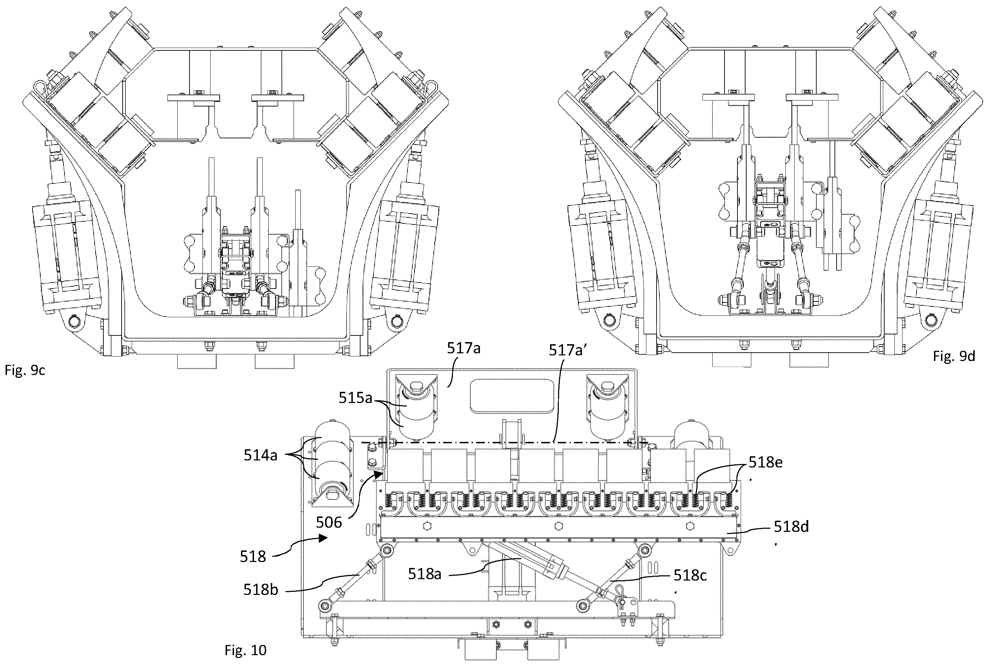

The tracking device 510 further comprises two sets of guiding wheels 515a, 515b on each lateral side of the body part 511 (only one set on each side can be seen in fig. 9a-d ), the guiding wheels being arranged laterally outside the aligning wheels 514a, 514b. The guiding wheels are laterally displaceable relative the body part by means of being rotatably attached to a respective holding element 517a, 517b which is pivotable/rotatable relative the body part around axes of rotation (axis of rotation 517' of holding element 517a is seen in fig. 10) which are perpendicular with the corresponding axes of rotation 515a', 515b' of the guiding wheels. When the tracking device is aligned with the slotted element, as shown in fig. 9c and 9d, the axes of rotation of the holding elements are substantially parallel with the lengthwise direction of the slotted element.

The aligning wheels 514a, 514b and the guiding wheels 515a, 515b have the same diameter, and in the extended positions of the guiding wheels as shown in fig. 9a, the axis of rotation 514a', 514b' of the alignment wheels and the axis of rotation 515a', 515b' of the guiding wheels on the respective side lie in the same plane, which plane is disposed at the same angle as the chamfered aligning edges (45 degrees in this embodiment). Consequently, each of the guiding surfaces 515a", 515b" formed by the guiding wheels lie in the same plane as the corresponding aligning surfaces 514a", 514b" formed by the aligning wheels. The alignment actuators 517c, 517d of the tracking device are pneumatic cylinders, but may in other embodiments for example be electric, hydraulic or other actuation means that may be applied by those skilled in that art. Further, the actuator may be wire-operated or the like, i.e. an actuator that gets its movement via for example wires from a source of power disposed at a distance. The alignment actuators pivots/rotates the holding elements such that the guiding wheels are displaced towards and away from the slotted element.

The current collector comprises two sets of contact elements 506, each set of contact element being adapted to co-act with a corresponding electric conductor 505 in the slotted element 502. The contact elements are connected to the body part 511 by means of a displacement device 518 which is shown in more detail in fig. 10. The displacement device is configured to displace the contact elements towards and away from the body part 511, i.e. in a direction towards and away from the slotted element when the current collector is laterally aligned therewith.

The current collector in fig. 9a-d aligns with the slotted element as follows.

In fig. 9a, the current collector has been roughly laterally aligned with the slotted element by means of the collector arm, whereafter a control system orders the tracking device 510 to be displaced towards the slotted element by means of the collector arm such that the uppermost of guiding wheels 515a makes contact with the chamfered aligning edge 516b. The tracking device is displaced further upwards such that the first the guiding wheels 515a, and thereafter the aligning wheels 514a slide on the chamfered aligning edge 516b until the position shown in fig. 9b is achieved. Thus, both the guiding wheels and the aligning wheels have an aligning function. The sliding motion has been stopped by means of the lowermost of alignment wheels 514b having come into contact with chamfered aligning edge 516d. The current collector with its tracking device is now laterally aligned with the slotted element.

The control system receives signals from position sensors 519a, 519b indicating that the current collector is laterally and vertically aligned, whereafter the control system orders the alignment actuators 517c, 517d to pivot the holding elements 517a, 517b until the guiding wheels 515a, 515b make contact with the respective chamfered guiding edges in the position shown in fig. 9c. The axes of rotation 515a', 515b' of the guiding wheels are now angled at corresponding angles as the chamfered guiding edges 516a, 516c. Thereafter, the control system orders actuator 518a (see fig. 10) to displace the contact elements 506 upwards into the slots 507 into contact with the electric conductors 505 of the slotted element as can be seen in fig. 9d. At the same time, ground contact element 506' comes into contact with an exterior portion 502' of the slotted element, which is connected to ground.

In fig. 10, shows a cross-section view of parts of the embodiment in fig. 9a-d. The cross-section is taken in a vertical plane through the rightmost contact element 506 as seen in fig. 9a-d. As can be seen in fig. 10, the contact element 506 is formed form a plurality of consecutively arranged plate-shaped elements, each being resiliently connected (by means of spring members 518e for example) to an elongated base part 518d of displacement device 518. The base part is connected to the body part 511 of the tracking device by means of two parallel and pivotable rods 518b, 518c which are rotatably connected at respective ends thereof to the base part and the body part. Further, an actuator in the form of a pneumatic cylinder 518a is connected between the base part and the body part such as to displace the base part 518d towards and away from the body part 511. In other embodiments, the actuator may be hydraulic, electric or other means of actuation such as a wire-operated actuator or the like, i.e. an actuator that gets its movement via for example wires from a source of power disposed at a distance. Further in fig. 10, it can be seen that two sets of aligning wheels 514a are disposed longitudinally spaced apart at opposite longitudinal sides of the holding element 517a. Further, it can be seen that two sets of guiding wheels 515a are fitted longitudinally spaced apart on the holding element 517a. In other embodiments, only one set or more than two sets of guiding/aligning wheels are provided on each lateral side of the tracking device.

For safety reasons the ground contact element makes contact before the main contact elements. This is achieved by all of the individual plate-shaped elements of contact elements 506 and ground contact elements 506' being preloaded with one or more springs (518a for example) that is allowed to compress. This compression spring also allows for un-even wear of individual contact elements, which may also be referred to as "brushes", allowing all contact elements to be seated against the respective electric conductor. Actuator 518a applies a controlled force to ensure the correct contact force is maintained to the brush carrier assembly, the individual brush springs then allow each brush to maintain an even individual force to the electric conductors.

Although reference is made above to a control system, which may be an electronic control system, it is not illustrated in the figures since such systems are well known in the art.

The description above and the appended drawings are to be considered as non-limiting examples of the invention. The person skilled in the art realizes that several changes and modifications may be made within the scope of the invention. For example, tracking devices of one embodiment may be combined with collector arms from other embodiments. Further, the edges of the slotted element in fig. 9a-d are not necessarily chamfered at 45 degrees. Furthermore, while these figures are shown in a vertical overhead orientation, it is appreciated that the orientation may be any angle from the vertical plane. It is appreciated that wheels may be sliders, skid plates, magnets or in fact any other means of providing the function of the wheels as described. It is obvious that the individual contact element springs may be another device or devices such as pneumatic energizers, rubber or other devices that can apply a controlled and known force to each brush. The number of electric conductors (and contact elements) may be one or more.

### LIST OF EMBODIMENTS

1. System for electrically feeding at least one electrically powered vehicle (1), comprising:
   - at least one elongated slotted element (2; 402; 502) being suspended and adapted to extend along a road section (3) on which the at least one vehicle is adapted to travel with its lengthwise direction substantially in parallel with the direction of travel, said elongated slotted element comprising at least one electric conductor (5; 505) arranged in at least one slot (7; 507) in said elongated slotted element and being adapted to be electrically energized;
   - at least one current collector (4) being adapted to co-act with said at least one suspended elongated slotted element (2), said current collector comprising
      at least one contact element (6; 206; 506) being adapted to connect electrically with corresponding at least one electric conductor (5; 505) of said elongated slotted element;
      at least one collector arm (8; 108; 308a-b) supporting the at least one contact element at its first end (8') and being adapted to connect directly or indirectly to an electrically propellable vehicle at its second end (8"), and
      at least one actuator (9; 109a-b) configured to act on the at least one collector arm to displace the first end (8') towards the at least one suspended elongated slotted element,
   wherein said contact element (6; 106; 206; 506) is connected to the at least one collector arm by means of a tracking device (10; 110; 510) , said tracking device comprising a body part (11; 111; 211; 411; 511) to which said at least one contact element is connected, said tracking device further comprising lateral guiding means comprising at least two guiding wheels (12a-b; 115a-d; 215a-d; 415a-b; 515a-b) or sliding elements configured to roll or slide against laterally facing portions (2', 2"; 502', 502") on both lateral sides of the elongated slotted element (2; 502) to guide the tracking device laterally relative elongated slotted element, wherein said at least two guiding wheels or sliding elements are laterally displaceable relative said body part by means of an alignment actuator (13).
2. System according to any of the preceding embodiments, wherein said tracking device (110) further comprises vertical guiding means (114a-114d; 514a-b) configured to co-act with the elongated slotted element to guide the tracking device vertically relative said elongated slotted element,
3. System according to any of the preceding embodiments, wherein said at least two guiding wheels (12a-b; 115a-d; 215a-d; 415a-b; 515a-b) or sliding elements are laterally displaceable relative the body part (11; 111; 211; 411; 511) by means of said alignment actuator (13, 213) between extended positions where the guiding elements or wheels are spaced apart a first distance being greater than the lateral width of the elongated slotted element and withdrawn positions where the guiding elements or wheels are spaced apart a second distance corresponding to said lateral width.
4. System according to embodiment 3, wherein said alignment actuator (213) of the tracking device is a mechanical actuator comprising an alignment bar (213') having a length in the lateral direction being equal to or greater than said first distance, said alignment bar being displaceable relative the body part (211), and being mechanically connected to the guiding wheels or sliding elements (215a-215d) such as to displace the at least two guiding wheels or sliding elements towards each other when the alignment bar is pushed towards the body part.
5. System according to embodiment 4, further comprising an electronic control unit and at least one thereto connected position sensor, said electronic control unit being configured to, in response to signals from said at least one position sensor, control the at least one actuator such that the alignment bar (213') of the tracking device is laterally aligned with said elongated slotted element, whereafter the electronic control unit controls the at least one actuator to displace the tracking device towards the elongated slotted element such that the alignment bar (213') is pushed towards the body part (211) of the tracking device.
6. System according to embodiment 3, wherein said alignment actuator (13) of the tracking device (10) is an electrical, hydraulic or pneumatic actuator.
7. System according to any of the preceding embodiments, wherein said elongated slotted element (402) is provided with a flange (416a, 416b) or groove on at least one lateral side, said flange or groove extending along the lengthwise direction of the elongated slotted element and being configured to receive at least parts of the guiding wheels or sliding elements (415a, 415b) thereon or therein to support the tracking device when the guiding wheels or sliding elements are in abutment with the elongated slotted element.
8. System according to any of the preceding embodiments, wherein said at least one contact element is connected to the body part by means of one or more resilient connection means.
9. System according to embodiment 8, wherein said resilient connection means comprises a spring device, for instance in the form of an arm segment being at least partly formed from a resilient material.
10. System according to any the preceding embodiments, wherein said collector arm (8; 108; 308a) comprises a telescopic arm segment being directly or indirectly connectable to a vehicle.
11. System according to embodiment 10, wherein said at least one actuator (9; 109a) comprises an actuator configured to extend and withdraw the telescopic arm segment.
12. System according to embodiment 11, wherein said actuator (109a) is a hydraulic actuator, an electric actuator or a pneumatic actuator.
13. System according to any of the preceding embodiments, wherein said current collector comprises rotational connection means (118) for directly or indirectly rotatably connecting the second end of the collector arm to a vehicle.
14. System according to embodiment 13, wherein said at least one actuator comprises an actuator (109a) configured to rotate the current collector around a rotational axis defined by the rotational connection means (118).
15. System according to any of the preceding embodiments, further comprising a sliding device (120) arranged at the second end of the collector arm (108), said sliding device being configured to allow lateral movement of the collector arm relative a vehicle.
16. System according to any of embodiments 1-14, wherein the collector arm is formed by at least two serially arranged arm segments comprising first and second arm segments (308a, 308b), further comprising a sliding device (320) arranged between said first and second arm segments, said sliding device being configured to allow lateral movement of the first arm segment relative the second arm segment.
17. System according to embodiment 6, further comprising an electronic control unit and at least one thereto connected position sensor, said electronic control unit being configured to:
   - control the alignment actuator such that the guiding wheels or sliding elements are displaced to their extended positions;
   - control, after the guiding wheels or sliding elements have been displaced to their extended positions and in response to signals from said at least one position sensor, the at least one actuator such that tracking device is aligned with the slotted element between the guiding wheels or sliding elements;
   - control, after the tracking device has been aligned with the slotted element, the alignment actuator to displace the guiding wheels or sliding elements laterally inwards towards the slotted element until the at least one contact element is laterally aligned with the at least one corresponding electric conductor, and
   - control, after the contact element has been laterally aligned with the at least one corresponding electric conductor, the at least one actuator to displace the tracking device towards the slotted element until the at least one contact element is in contact with the corresponding at least one electric conductor.
18. System according to any of embodiments 1-6 or any of embodiments 8-16 as dependent on any of embodiments 1-6, wherein each laterally facing portion (502', 502") of the slotted element (502) is provided with an aligning edge (516b, 516d) at the bottom thereof, and wherein said tracking device (510) comprises at least one set of aligning wheels or sliding elements (514a, 514b) on each lateral side thereof, wherein the aligning wheels or sliding elements at each lateral side are disposed to form a respective aligning surface (514a", 514b") being arranged to slide laterally against the corresponding aligning edges (516b, 516d) at the bottom of the laterally facing portions, the aligning wheels or sliding elements further being spaced apart a distance such that at least one aligning wheel or sliding element (514a, 514b) of each set of aligning wheels or sliding elements is able to roll or slide against a corresponding aligning edge (516b, 516d) at the bottom of the laterally facing portions,
   wherein the guiding wheels or sliding elements (515a, 515b) are laterally displaceable relative to the body part (511) between extended positions where the guiding wheels or sliding elements are spaced apart a first distance being greater than or equal to the lateral width of the elongated slotted element (502) and withdrawn positions where the guiding wheels or sliding elements are disposed at a distance from each other such that the guiding wheels or sliding elements roll or slide against respective lateral portions.
19. System according to embodiment 18, wherein the aligning edges are chamfered, and wherein the aligning wheels are rotatable around axes of rotation (514a', 514b') disposed at corresponding angles as the chamfered aligning edges.
20. System according to embodiment 18 or 19, wherein at least one laterally facing portion (502', 502") of the slotted element (502) is furthermore provided with a guiding edge (516a, 516c) at the top thereof, and wherein the guiding wheels or sliding elements (515a, 515b) are laterally displaceable relative the body part (511) by means of being supported by holding elements (517a, 517b) at the lateral sides of the tracking device, which holding elements are rotatable relative the body part around respective axes of rotation (517a') being substantially parallel with the lengthwise direction, wherein at least one set of guiding wheels or sliding elements in the withdrawn position is aligned to co-act with the corresponding guiding edge (516a, 516c) at the top of the laterally facing portion, and wherein the guiding wheels or sliding elements in the withdrawn positions are disposed at a distance from each other such that said at least one set of guiding wheels or sliding elements roll or slide on said guiding edge.
21. System according to embodiment 20, wherein the guiding edges are chamfered, and wherein the guiding wheels are rotatable around axes of rotation (515a', 515b') disposed at corresponding angles as the guiding edges.
22. System according to any of embodiments 18-21, wherein the guiding wheels or sliding elements (515a, 515b) at each lateral side form a respective guiding surface (515a", 515b"), and wherein the aligning wheels or sliding elements and the guiding wheels or sliding elements are aligned such that, in the extended positions of the guiding wheels or sliding elements, each aligning surface (514a", 514b") of the aligning wheels or sliding elements and the guiding surface of the adjacent guiding wheels or sliding elements are disposed in a common plane.
23. System according to any of embodiments 18-22, wherein the at least one contact element is connected to the body part by means of a displacement device (518) configured to displace the contact elements relative the body part in a direction towards and away from the body part (511).
24. System according to any of the preceding embodiments, wherein the at least one current collector comprises at least one ground contact element (506'), said ground contact element being arranged to co-act with an exterior portion (502"') of the slotted element (502), said exterior portion being connected to ground, wherein said ground contact element is configured to, when the current collector is brought in contact with the slotted element, connect with said exterior portion prior to said at least one contact element (506) connect with the corresponding at least one electric conductor.
25. System according to embodiment 24, wherein said at least one ground contact element (506') is resiliently preloaded by means of at least one spring member which is compressed when the contact element makes contact with the exterior portion (502‴).
26. System according to any of the preceding embodiments, wherein said at least one contact element (506) each comprises at least two contact element parts being individually resiliently preloaded by means of at least one spring member (518e) which is compressed when the contact element makes contact with the corresponding electric conductor (505).

## Claims

1. System for transferring electrical power to at least one electrically powered vehicle (1), comprising:
- at least one elongated element (2; 402; 502) being suspended and adapted to extend along a road section (3) on which the at least one vehicle is adapted to travel with its lengthwise direction substantially in parallel with the direction of travel, said at least one elongated element being conductive and adapted to be electrically energized or comprising at least one electric conductor (5; 505) mounted thereto and being adapted to be electrically energized;
- at least one current collector (4) being adapted to co-act with said at least one suspended elongated element (2), said current collector comprising
at least one contact element (6; 206; 506) being adapted to connect electrically with at least one of said at least one elongated element being conductive or with corresponding at least one electric conductor (5; 505) of said at least one elongated element;
at least one collector arm (8; 108; 308a-b) supporting the at least one contact element at its first end (8') and being adapted to connect directly or indirectly to an electrically powered vehicle at its second end (8"), and
at least one actuator (9; 109a-b) configured to act on the at least one collector arm to displace the first end (8') towards the at least one suspended elongated element,
wherein said contact element (6; 106; 206; 506) is connected to the at least one collector arm by means of a guiding device (10; 110; 510) , said guiding device comprising a body part (11; 111; 211; 411; 511) to which said at least one contact element is connected, said guiding device further comprising lateral guiding means configured to co-act with at least one laterally facing portion (2', 2"; 502', 502") of the at least one elongated element (2; 502) to guide the guiding device laterally relative the at least one elongated element, wherein said lateral guiding means are laterally displaceable by means of actuation.

2. System according to claim 1, wherein the at least one contact element is connected to the body part by means of a displacement device (518) configured to displace the contact elements relative the body part in a direction towards and away from the body part (511).

3. System according to claim 2, wherein said displacement device comprises an actuator such as a hydraulic actuator, a pneumatic actuator, an electric motor or a solenoid.

4. System according to any of the preceding claims, wherein said at least one contact element (506) each comprises at least two contact element parts, further comprising devices configured to apply an individually controlled force to each contact element part to make contact with a corresponding conductive elongated element or electric conductor.

5. System according to any of claims 1-3, wherein said at least one contact element (506) each comprises at least two contact element parts being individually resiliently preloaded by means of at least one spring member (518e) or pneumatic energizer which is compressed when the contact element makes contact with a corresponding conductive elongated element or electric conductor.

6. System according to any of the preceding claims, wherein said guiding device (110) further comprises additional guiding means (114a-114d; 514a-b) configured to co-act with the at least one elongated element to guide the guiding device in a direction towards and away from said at least one elongated element.

7. System according to any of the preceding claims, wherein said lateral guiding means is formed as one or more wheels, sliding elements or magnets.

8. System according to any of the preceding claims, wherein at least one of said lateral guiding means is laterally displaceable relative to said body part by means of an alignment actuator.

9. System according to claim 8, wherein said lateral guiding means comprises one or more guiding wheels (12a-b; 115a-d; 215a-d; 415a-b; 515a-b) or sliding elements or magnets, configured to roll or slide against or maintain position relative to laterally facing portions (2', 2"; 502', 502") to guide the guiding device laterally relative elongated element, wherein at least one guiding wheel or sliding element or magnet is laterally displaceable relative said body part by means of said alignment actuator (13).

10. System according to claim 9, comprising at least two guiding wheels or sliding elements or magnets configured to roll or slide against or maintain position relative to at least one laterally facing portion (2', 2"; 502', 502") on both lateral sides of the elongated element (2; 502) to guide the guiding device laterally relative elongated element, wherein said at least two guiding wheels (12a-b; 115a-d; 215a-d; 415a-b; 515a-b) or sliding elements or magnets are laterally displaceable relative the body part (11; 111; 211; 411; 511) by means of said alignment actuator (13, 213) between extended positions where the guiding wheels, or sliding elements, or magnets are spaced apart a first distance being greater than the lateral width of the at least one elongated element and withdrawn positions where the guiding wheels or sliding elements or magnets are spaced apart a second distance corresponding to said lateral width.

11. System according to any of claims 1-10, wherein said guiding device comprises an alignment actuator (13) for actuating the lateral guiding means, said alignment actuator being an electrical, hydraulic, or pneumatic actuator or a mechanical actuator.

12. System according to any of the preceding claims, wherein said at least one elongated element (402) is provided with a flange (416a, 416b) or groove on at least one lateral side, said flange or groove extending along the lengthwise direction of the elongated element and being configured to receive the lateral guiding means thereon or therein to support the guiding device when the lateral guiding means are in abutment with the at least one elongated element.

13. System according to any of the preceding claims, wherein at least one laterally facing portion of the elongated element is furthermore provided with a chamfered or rounded guiding edge at the top thereof, wherein the lateral guiding means comprises guiding wheels or sliding elements or magnets which are laterally displaceable relative the body part by means of being supported by holding elements at the lateral sides of the guiding device, which holding elements are rotatable relative the body part around respective axes of rotation being substantially parallel with the lengthwise direction or perpendicular with corresponding axes of rotation of the guiding wheels, wherein at least one set of guiding wheels, sliding elements or magnets is, in a withdrawn position, disposed to co-act with the corresponding guiding edge, and the guiding wheels, sliding elements or magnets in the withdrawn position are disposed at a distance from each other such that said at least one set of guiding wheels, sliding elements or magnets roll or slide on or maintain position relative to said guiding edge.

14. System according to any of the preceding claims, wherein said at least one contact element is connected to the body part by means of one or more resilient connection means which may comprise as a spring device, for instance in the form of an arm segment being at least partly formed from a resilient material.

15. System according to any the preceding claims, wherein said collector arm (8; 108; 308a) comprises a telescopic arm segment being directly or indirectly connectable to a vehicle, wherein said at least one actuator (9; 109a) comprises an actuator configured to extend and withdraw the telescopic arm segment.

16. System according to any of the preceding claims, wherein said current collector comprises rotational connection means (118) for directly or indirectly rotatably connecting the second end of the collector arm to a vehicle, wherein said at least one actuator comprises an actuator (109a) configured to rotate the current collector around a rotational axis defined by the rotational connection means (118).

17. System according to any of the preceding claims, further comprising an electronic control unit and at least one thereto connected position sensor, said electronic control unit being configured to:
- control, in response to signals from said at least one position sensor, the at least one actuator such that the guiding device is aligned with the elongated element;
- control, after the guiding device has been aligned with the elongated element, the alignment actuator to displace the lateral guiding means laterally inwards towards the elongated element until the at least one contact element is laterally aligned with the at least one corresponding conductive elongated element or electric conductor of the elongated element, and
- control, after the contact element has been laterally aligned with the at least one corresponding conductive elongated element or electric conductor of the elongated element, the at least one actuator to displace the guiding device towards the elongated element until the at least one contact element is in contact with the corresponding at least one conductive elongated element or electric conductor of the elongated element.

18. System according to any of the preceding claims, wherein each laterally facing surface portion (502', 502") of the elongated element (502) is provided with an aligning edge (516b, 516d) at the bottom thereof, and wherein said guiding device (510) comprises at least one set of aligning wheels or sliding elements (514a, 514b) on each lateral side thereof, wherein the aligning wheels or sliding elements at each lateral side are disposed to form a respective aligning surface (514a", 514b") being arranged to slide laterally against the corresponding aligning edges (516b, 516d) at the bottom of the laterally facing surface portions, the aligning wheels or sliding elements further being spaced apart a distance such that at least one aligning wheel or sliding element (514a, 514b) of each set of aligning wheels or sliding elements is able to roll or slide against a corresponding aligning edge (516b, 516d) at the bottom of the laterally facing surface portions,
wherein the guiding wheels or sliding elements (515a, 515b) are laterally displaceable relative to the body part (511) between extended positions where the guiding wheels or sliding elements are spaced apart a first distance being greater than or equal to the lateral width of the elongated element (502) and withdrawn positions where the guiding wheels or sliding elements are disposed at a distance from each other such that the guiding wheels or sliding elements roll or slide against respective lateral portions,
wherein at least one laterally facing surface portion (502', 502") of the elongated element (502) is furthermore provided with a guiding edge (516a, 516c) at the top thereof, and wherein the guiding wheels or sliding elements (515a, 515b) are laterally displaceable relative the body part (511) by means of being supported by holding elements (517a, 517b) at the lateral sides of the tracking device, which holding elements are rotatable relative the body part around respective axes of rotation (517a') being substantially parallel with the lengthwise direction, wherein at least one set of guiding wheels or sliding elements in the withdrawn position is aligned to co-act with the corresponding guiding edge (516a, 516c) at the top of the laterally facing surface portion, and wherein the guiding wheels or sliding elements in the withdrawn positions are disposed at a distance from each other such that said at least one set of guiding wheels or sliding elements roll or slide on said guiding edge, wherein the aligning and guiding edges are rounded or chamfered.

19. System according to claim 18 as dependent on claim 2, further comprising a control system and thereto connected position sensors, said control system being configured to:
- Order, by means of the collector arm, the guiding device to be displaced towards the elongated element;
- In response to signals from the position sensors indicating that the current collector is laterally and vertically aligned, order the alignment actuators to pivot the holding elements until the guiding wheels or sliding elements make contact with the respective guiding edges, and
- Order the displacement device to displace the contact elements into contact with the conductive elongated element or with the electric conductors.
